(19) Europäisches Patentamt
European Patent Office
Office européen des brevets

(11) EP 0 843 800 B1

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(21) Anmeldenummer: **97925932.2**

(22) Anmeldetag: **22.05.1997**

(51) Int Cl.⁷: $F25D\ 29/00$, F25D 3/12, C01B 31/22

(86) Internationale Anmeldenummer:
**PCT/EP97/02612**

(87) Internationale Veröffentlichungsnummer:
**WO 97/046839 (11.12.1997 Gazette 1997/53)**

(54) **EXPANSIONSDÜSE UND VERFAHREN ZUR ERZEUGUNG VON KOHLENDIOXIDSCHNEE**

EXPANSION NOZZLE AND PROCESS FOR MAKING CARBON DIOXIDE SNOW

BUSE D'EXPANSION ET PROCEDE POUR PRODUIRE DE LA NEIGE CARBONIQUE

(84) Benannte Vertragsstaaten:
**AT BE CH DE DK FI FR GB LI NL SE**

(30) Priorität: **31.05.1996 DE 19621835**

(43) Veröffentlichungstag der Anmeldung:
**27.05.1998 Patentblatt 1998/22**

(73) Patentinhaber: **AGA AKTIEBOLAG**
**181 81 Lidingö (SE)**

(72) Erfinder:
• **BERGHOFF, Rudolf**
**D-59872 Meschede (DE)**
• **BALDUHN, Reinhard**
**D-30104 Bad Driburg (DE)**

(56) Entgegenhaltungen:
| | |
|---|---|
| **EP-A- 0 057 119** | **EP-A- 0 447 683** |
| **FR-A- 2 253 193** | **US-A- 1 969 169** |
| **US-A- 3 014 705** | **US-A- 3 672 181** |
| **US-A- 3 815 377** | **US-A- 3 905 555** |
| **US-A- 4 187 325** | **US-A- 5 040 374** |

EP 0 843 800 B1

**Beschreibung**

Die Erfindung betrifft eine Expansionsdüse und ein Verfahren zur Erzeugung von Kohlendioxidschnee zur Besprühung von Kühl- oder Gefriergut, wobei die Expansionsdüse ein integriertes Dosierventil mit einer Ausströmöffnung mit einem zuströmseitigen Ventilsitz und einer gegenüber diesem Ventilsitz verstellbaren, das Dosierventil in Ausströmrichtung verschließenden, im geschlossenen Zustand in die Austrittsöffnung des Dosierventils hineinragenden Ventilnadel aufweist.

Eine derartige Expansionsdüse zur Erzeugung von Kohlendioxidschnee ist aus der US-A-1,969,169 bekannt. Diese Expansionsdüse weist ein integriertes Dosierventil mit einer Ausströmöffnung mit einem zuströmseitigen Ventilsitz und eine gegenüber dem Ventilsitz verstellbare, das Dosierventil in Ausströmrichtung verschließende und im geschlossenen Zustand in die Austrittsöffnung des Dosierventils hineinragende Ventilnadel auf. Diese Expansionsdüse eignet sich auch zur Kühlung von Gefriergut. Der Ventilsitz ist zustromseitig senkrecht zur Strömungsrichtung stufenförmig und abströmseitig mit einem sehr spitzen sich erweiternden Konustrichter ausgebildet, und die Ventilnadel ist in einem rückwärtigen Gewinde axial verstellbar. Die Ventilgeometrie neigt zum Verstopfen mit stromauf ausgeschiedenem Kohlendioxidschnee, der durch unstetigen Druckabfall und Turbulenzen dort entstehen kann.

Weiterhin ist aus der US-A-4,187,325 ein Verfahren zum Schockfrosten von Kühl- und Gefriergut bekannt, bei dem flüssiges Kohlendioxid über mindestens eine Zuleitung einer Expansionsdüse zugeführt wird und darin entspannt auf das Kühl- oder Gefriergut gesprüht wird, wobei flüssiges, Gasanteile enthaltendes Kohlendioxid durch einen der Expansionsdüse vorgeschalteten Gasabscheider geleitet wird, in welchem das gasförmige Kohlendioxid aus dem flüssigen Kohlendioxid abgetrennt wird. Dieser Gasabscheider besteht aus einem Tank, dem bodenseitig die Flüssigkeit und obenseitig das Gas entnommen wird.

Aus der US 3,815,377 ist es bekannt, zum Kühlen oder zum Schockgefrieren von Kühl- oder Gefriergut, z. B. Lebensmitteln, das Kühl- oder Gefriergut mit Kohlendioxidschnee, welcher beim Entspannen von flüssigem Kohlendioxid in einer Expansionsdüse erzeugt wird, zu besprühen. Hierzu befindet sich das Kühl- oder Gefriergut gewöhnlich in einer Kühl- oder Frosterkammer, in welche eine Zuleitung für flüssiges Kohlendioxid führt, an welcher sich endseitig in der Kühl- oder Frosterkammer angeordnet die Expansionsdüse befindet. In der Zuleitung befindet sich üblicherweise ein den Durchfluß regelndes Dosierventil. Das $CO_2$ befindet sich normalerweise in flüssiger Form in einem Lagertank, wo es im Gleichgewicht mit der $CO_2$-Gasphase oberhalb der Flüssigkeit im Tank steht. Der Druck im Tank wird hierbei üblicherweise auf ca. 18 bar, die Temperatur auf ca. -23°C gehalten. Bei den bisher bekannten Anlagen führen vom Tank üblicherweise zwei Rohrleitungen zur Kühl- oder Frosterkammer. In einer Leitung strömt das flüssige $CO_2$ zur Kühl- oder Frosterkammer und stellt dort die erforderliche Kälteleistung zur Verfügung. Die zweite Rohrleitung führt vom oberen Gasbereich des Tanks zur Kühl- oder Frosterkammer und ist kurz vor dem Eintritt in die Kühl- oder Frosterkammer mit der ersten Leitung über einen Absperrhahn verbunden. Der Tank und die erste Leitung sind mit einer dicken Isolierschicht, z. B. aus PU-Schaum, gegen einfallende Wärme bzw. gegen Kälteverlust thermisch isoliert. Durch die zweite, nicht isolierte Rohrleitung strömt gasförmiges $CO_2$ zur Kühl- oder Frosterkammer. Dieses dient zum Spülen des hinter dem Dosierventil liegenden Teils der Flüssigkeitsrohrleitung und der Entspannungsorgane. Um in der Kühl- oder Frosterkammer die gewünschte Betriebstemperatur zu erreichen und zu erhalten, wird üblicherweise taktweise $CO_2$ in die Kühl- oder Frosterkammer eingesprüht. Hierzu wird in der Kühl- oder Frosterkammer eine Temperaturmessung durchgeführt. Bei Überschreiten der Temperatur über einen eingestellten Grenzwert wird die Kühlmittelzufuhr eingeschaltet, d. h. die Ventile für flüssiges $CO_2$ in der Zugangsleitung werden geöffnet. Bei Unterschreiten der Temperatur unter einem eingestellten Grenzwert wird die Kühlmittelzufuhr unterbrochen, d. h. die Ventile werden wieder geschlossen. Das Ein- und Ausschalten der Kühlmittelzufuhr geschieht üblicherweise mit Magnetventilen, die sich in der Zuleitung außerhalb der Kühl- oder Frosterkammer befinden. Nach dem Abschalten der Kühlmittelzufuhr sinkt der Druck im anschließenden Rohr und den Entspannungsorganen auf einen Umgebungsdruck von ca. 1 bar ab. Erfolgt die Druckabsenkung unterhalb des Tripelpunktdruckes von 5,18 bar während sich noch $CO_2$-Flüssigkeit in der Zuleitung befindet, so findet eine Phasenumwandlung in festen $CO_2$-Schnee statt. Dieser feste $CO_2$-Schnee kann nicht mehr durch die Entspannungsorgane austreten, wodurch das System verstopft. In einem ungünstigen Fall kann es zu einer Blockade der Ventile und im Extremfall zu weiten Teilen der gesamten Rohrleitung kommen. Die Rohrleitungen müssen dann am Tank geschlossen werden und über mehrere Stunden hinweg aufgetaut werden. Weiterhin besteht im Extremfall auch die Gefahr, daß während einer solchen Blockade die Leistungen bersten, da in den Rohrleitungen Drücke bis zu 60 bar auftreten können. Um derartige Verstopfungen zu verhindern, wird mittels des gasförmigen $CO_2$ aus der zweiten Leitung die Flüssigkeitsleitung hinter dem Ventil sowie das Entspannungsorgan nachgespült. Das einströmende $CO_2$-Gas drückt die Flüssigkeit aus dem Leitungssystem heraus und verhindert einen Druckabfall unterhalb des Tripelpunktes, so lange sich noch $CO_2$-Flüssigkeit in der Rohrleitung befindet.

Ein Nachteil dieser Vorrichtung besteht darin, daß durch das Spülen der Flüssigkeitsleitung und das Aufrechterhalten des Drucks in der Flüssigkeitsleitung mit dem $CO_2$-Gas zusätzlich Kühlmittel verbraucht wird.

Dieses $CO_2$-Gas trägt nicht zur Kühlleistung für den Froster bei. Das zum Nachspülen verwendete $CO_2$-Gas erwärmt dagegen zusätzlich noch die Atmosphäre in der Kühl- und Frosterkammer, so daß sich die Pausenzyklen, in denen kein Kühlmittel eingesprüht wird, verkürzen und so zusätzlich ein unerwünscht hoher Kühlmittelverbrauch auftritt. Ein weiterer Nachteil besteht darin, daß die Temperatur in der Kühl- oder Frosterkammer zeitlich nicht konstant ist, sondern ständig zwischen einem oberen und einem unteren eingestellten Grenzwert hin und her schwingt. Hierdurch entsteht im Kühl- oder Gefriergut ebenfalls eine Temperaturschwankung, wodurch die Produktqualität beeinflußt wird. Derartige Temperaturschwankungen lassen sich zwar reduzieren, indem die oberen und unteren Grenzwerte in einem engen Bereich eingestellt werden, jedoch verringert sich hierdurch wiederum die Periodendauer eines Kühlzyklus und damit die Schaltfrequenz für ein Einsprühzyklen. Da nach jedem Einsprühzyklus mit $CO_2$-Gas nachgespült werden muß, erhöhen sich dann aber auch die Verluste infolge des Eintrags von warmem $CO_2$-Gas. Eine sichere kontinuierliche Dosierung ohne Verstopfung der Entspannungsorgane war bei den bisher bekannten Vorrichtungen und Expansionsdüsen mit dem dreiphasigen auftretenden Kühlmittel $CO_2$ nicht möglich.

Es ist Aufgabe der Erfindung, eine Expansionsdüse der eingangs genannten Art zu schaffen, die bei kostengünstigem und einfachem Aufbau einen stetigen Druckabfall ohne Turbulenzen erbringt, so daß keine Ausscheidungen von Kohlendioxidschnee stromauf entstehen und dadurch Temperaturschwankungen in der Kühl- oder Frosterkammer nahezu vollständig vermieden werden und eine gleichmäßige Produktqualität gewährleistet wird.

Diese Aufgabe wird gegenstandsmäßig dadurch gelöst, daß der Ventilsitz einen sich in Ausströmrichtung konisch verengenden Ausströmtrichter mit einem sich daran anschließenden kurzen Ausströmkanal aufweist, daß der Ausströmtrichter des Ventilsitzes einen Öffnungswinkel zwischen ca. 56° und ca. 76°, vorzugsweise 66°, aufweist und daß die Ventilnadel unter einem Winkel zwischen ca. 16° und ca. 30° spitz zuläuft.

Verfahrensmäßig wird die Aufgabe dadurch gelöst, daß der Kohlendioxid-Massestrom direkt in der Expansionsdüse kontinuierlich stufenlos dosiert wird.

Mit der erfindungsgemäßen Expansionsdüse ist es möglich, anstatt das Kohlendioxid diskontinuierlich zuzuführen, gemäß dem erfindungsgemäßen Verfahren eine kontinuierliche Kühlmittelzufuhr mit stetiger Regelung zu erreichen. Diese Regelung findet direkt am Ausgang der $CO_2$-Zuleitung statt. Es ist somit kein Nachspülen mit $CO_2$-Gas mehr nötig. Damit wird nicht nur der Kühlmittelverbrauch vermindert und die Frosterleistung erhöht, sondern es wird gleichzeitig auch beim Bau der Vorrichtung die Gasleitung zwischen dem Vorratstank und der Kühl- oder Frosterkammer eingespart. Durch die stetige Kühlmitteldosierung wird eine genauere, gleichmäßigere und zeitlich konstante Temperaturverteilung in der Kühl- oder Frosterkammer und damit im Kühl- oder Gefriergut erreicht. Dies trägt zur Erhöhung der Produktqualität bei. Die Einsprühmenge kann hierbei vollkommen beliebig konstant oder variabel sein. Der Strahl ist vorteilhafterweise ruhig und nicht pulsierend. Eine zusätzliche Einrichtung zur Erhaltung des Drucks vor der Expansionsdüse, um dort ein Unterschreiten des Tripelpunkts zu vermeiden, ist nicht notwendig.

Die Unteransprüche enthalten vorteilhafte Ausgestaltungen und Weiterbildungen der erfindungsgemäßen Expansionsdüse und des Verfahrens.

Der Ventilsitz weist einen sich in Ausströmrichtung konisch verengenden Ausströmtrichter und einen sich daran anschließenden kurzen Ausströmkanal auf. Vorzugsweise weist das Dosierventil eine Ventilbasis mit einer einseitig offenen Ventilkammer und einer zur Ventilkammer führenden Kühlmittelanschlußöffnung auf. Vorzugsweise mündet die Kühlmittelanschlußöffnung seitlich und in Richtung der Ausströmöffnung geneigt in die Ventilkammer. Die schräge Lage des Kühlmittelanschlusses sorgt dafür, daß das flüssige Kohlendioxid teilweise der Strömungsrichtung in der Ventilbasis und dem anschließenden Ventilsitz angepaßt ist.

Die Ventilnadel ist gegenüber der offenen Seite der Ventilkammer in der Ventilbasis in Nadellängsrichtung verschiebbar gelagert und ragt mit ihrer Spitze mindestens in der Schließstellung der Ventilnadel aus der offenen Seite der Ventilkammer heraus. Im zusammengebauten Zustand des Dosierventils ist die offene Seite der Ventilkammer durch eine den Ventilsitz enthaltende Ventilsitzplatte abgedeckt, welche vorzugsweise mit der Ventilbasis lösbar unter Einsetzen einer Dichtung verbunden ist. Durch diesen Aufbau ist ein einfaches Austauschen der Verschleißteile, wie Ventilnadel und Ventilsitz, möglich. Zum Zusammenbau wird bei eingebauter Ventilnadel die Ventilsitzplatte einfach über die Nadelspitze geschoben und so automatisch dicht schließend an der Nadel zentriert. Hierbei ist darauf zu achten, daß die Nadel während des Zusammenbaus axial frei beweglich ist um ein Verbiegen der Ventilnadel bei der Montage zu verhindern.

Gegenüber dem Ventilsitz ist die Ventilnadel in einem von der Ventilkammer aus nach außen verlaufenden Führungskanal aus der Ventilbasis herausgeführt. Der aus der Ventilbasis herausragende Ventilnadelkopf ist mit einem Stellantrieb, z. B. einem Schrittmotor, gekoppelt. Mittels dieses Stellantriebs kann die Ventilnadel axial bewegt werden. Durch die axiale Bewegung der Ventilnadel im Ventilsitz läßt sich der Strömungsquerschnitt sehr fein variieren. Auf diese Weise ist die Regelung des Kühlmittel-Massestromes möglich. Gleichzeitig übernimmt die Ventilnadel in Verbindung mit dem Ventilsitz die Aufgabe des Abdichtens der Kühlmittelzuführleitung, indem sie von dem Stellantrieb in den Düsensitz gedrückt wird, wodurch eine ringförmige Abdichtung entsteht.

Das Ventil erzeugt ohne ein weiteres nachgeschaltetes Bauteil einen kreisringförmigen Kühlmittelstrahl, bestehend aus $CO_2$-Gas und $CO_2$-Schnee. Die Form des Strahls ändert sich dabei mit zunehmendem Abstand vom Dosierventil. Der freie Kern des kreisförmigen Strahls verschwindet mit zunehmender Distanz, so daß aus dem Kreisring ein kreisförmiger Strahl wird. Der Strömungsquerschnitt entspricht dann dem Strömungsquerschnitt einer üblichen Düse mit zylinderförmigem Strömungsquerschnitt. Bei einer Anordnung derartiger Expansionsdüsen über einem Transportband mit einer Strahlrichtung von ca. 45° gegen die Vertikale werden auf dem Transportband für das Kühl- oder Gefriergut elliptische Sprühflächen erzeugt. Die Zeit in der sich ein bestimmtes Kühl- oder Gefriergut auf dem Transportband im kalten Sprühstrahl befindet ist somit abhängig von der Lage auf dem Transportband, da sich damit auch der Weg ändert, den das Kühl- oder Gefriergut durch den Strahl zurücklegen muß. Wird z. B. das Kühl- oder Gefriergut durch die Mitte des ellipsenförmigen Sprühstrahls gefördert, so findet eine maximale Abkühlung statt, da der Weg durch den Sprühstrahl maximal lang ist. Am Rande des Sprühstrahls hingegen erfährt das Kühl- oder Gefriergut nur eine geringere Abkühlung, da dort die Kühlphase infolge des kürzeren Weges nicht so lange andauert.

Aus diesem Grunde ist es besonders vorteilhaft, wenn sich an den Ausströmkanal ein sich endseitig im Querschnitt erweiternder Düsenabschnitt als Strahlformer anschließt, in welchem das flüssige Kohlendioxid strahlgerichtet entspannt wird.

Der Strahlformer weist vorzugsweise ventilseitig einen kurzen, zylindrischen, einen Düsenhals bildenden Kanal und einen sich daran anschließenden Expansionsbereich mit einem divergierenden Strömungsquerschnitt auf, dessen Abmessungen entsprechend der gewünschten Strahlform gewählt sind. Hierbei ist ein rechteckiger Strömungsquerschnitt besonders bevorzugt. Dieser wird vorteilhafter Weise zum Beispiel durch einen Expansionsbereich erzeugt, welcher als Schlitz mit zwei gegenüberliegenden divergierenden Seiten und zwei gegenüberliegenden parallelen Seiten ausgebildet ist.

Der Durchmesser des Düsenhalses ist in Abhängigkeit von der Nennweite des Dosierventils und den gewünschten Betriebsparametern in der Kühl- oder Frosterkammer und die Länge des Düsenhalses in Abhängigkeit von der Nennweite des Dosierventils, des Winkels der Ventilnadel und dem Hub des Stellantriebs der Ventilnadel so gewählt, daß der Druck des durch den Düsenhals strömenden Kohlendioxids innerhalb des Düsenhalses nicht unter den Tripelpunktsdruck des Kohlendioxids absinkt. Der Düsenhals des Strahlformers und der Ausströmkanal des Ventilsitzes weisen hierbei vorzugsweise den gleichen Durchmesser auf. Im zusammengebauten Zustand der Expansionsdüse schließt sich der Düsenhals nahtlos an den Ausströmkanal an. Die Gesamtlänge des Düsenhalses und des Ausströmkanals zusammen sollte hierbei vorzugsweise

entsprechend der Formel

$$L = \frac{D/2}{\tan \alpha/2}$$

bemessen werden. Hierbei ist D der Durchmesser des Düsenhalses bzw. des Ausströmkanals und $\alpha$ der Winkel der Nadelspitze. Dieser Wert kann jedoch auch um ungefähr 10% unter- oder überschritten werden. Es wird dann der Düsenhals nur von gasförmigem und flüssigem Kohlendioxid durchströmt, so daß das Kühlmittel weiterhin kontinuierlich dosiert werden kann, ohne daß durch $CO_2$-Schnee Verstopfungen oder Ablagerungen im Düsenhals bzw. im Ausströmkanal des Ventilsitzes auftreten. Erst innerhalb des divergierenden Expansionsbereichs sinkt der Druck unter den Tripelpunkt ab und es entstehen feste $CO_2$-Schneepartikel unter plötzlich stark vermehrter Bildung von $CO_2$-Gas.

Alternativ ist es prinzipiell auch möglich, den Düsenhals und/oder den Ausströmkanal derart auszugestalten, daß die Gesamtlänge mit der Lage der Ventilnadel gekoppelt veränderbar ist. Hierbei sollte die Länge des Strömungskanals sich bei geöffneter Ventilnadel entsprechend des axialen Nadelhubs verringern.

Da der Expansionsbereich divergent ausgelegt ist, ist die Bewegungsrichtung der $CO_2$-Schneepartikel vom Düsenschlitz weggerichtet, somit treten keine oder nur untergeordnete Geschwindigkeitskomponenten in Richtung Schlitzwandungen auf. Eine Verstopfung wird damit vermieden. Mit der Strahlaufweitung tritt ebenfalls eine Geschwindigkeitserhöhung in axialer Richtung und quer dazu auf. Dadurch erhalten die $CO_2$-Schneepartikel und das kalte $CO_2$-Gas einen größeren Impuls, so daß der Strahl nach Verlassen des Schlitzes seine Richtung und Ausdehnung beibehält. Durch die Ausführung des Expansionsbereichs als Schlitz läßt sich so vorteilhafterweise ein Flachstrahl mit rechteckförmigem Sprühquerschnitt erzeugen. Der Strahl läßt sich hierbei prinzipiell so breit machen, daß er sich über die gesamte Breite des Transportbandes erstreckt.

Erfindungsgemäß wird somit durch die spezielle Anordnung des Dosierventils und des angeschlossenen Strahlformers der Expansionsdüse der Kohlendioxidstrahl innerhalb der Expansionsdüse zunächst ringförmig um die Nadelspitze in den Ausströmkanal bzw. den Düsenhals geführt und dort zusammengeführt und anschließend, unter Bildung des Kohlendioxidschnees, gerichtet entspannt. Auf diese Weise wird vermieden, daß innerhalb des Auströmkanals bzw. des Düsenhalses der Tripelpunkt unterschritten wird.

Vorteilhafterweise sind das Dosierventil und der Strahlformer als modulare Baueinheiten der Expansionsdüse hintereinandergeflanscht, wobei vorzugsweise die Anschlußflächen des Dosierventils und des Strahlformers unter Passung zentriert ineinanderfassen. Es ist somit möglich, das Dosierventil wahlweise mit dem entsprechend gewünschten Strahlformer, z. B. mit der passenden Breite, zu bestücken.

Eine Weiterbildung der Erfindung erstreckt sich selbstverständlich auch auf eine entsprechende Vorrichtung zum Kühlen oder Schockfrosten von Kühl- oder Gefriergut mit mindestens einer Kühl- oder Frosterkammer, mindestens einer in die Kühl- oder Frosterkammer führenden Zuleitung für flüssiges Kohlendioxid mit mindestens einer endseitig daran in der Kühl- oder Frosterkammer angeordneten Expansionsdüse und einem den Durchfluß in der Zuleitung regelnden Dosierventil, wobei die Expansionsdüse das Dosierventil als integrierten Bestandteil enthält und gemäß der vorbeschriebenen Erfindung ausgebildet ist.

Ein eigenständiger gedanke innerhalb dieser Vorrichtung ist darin zu sehen, daß in der Zuleitung für das flüssige Kohlendioxid ein Gasabscheider zwischengeschaltet ist, welcher die im flüssigen Kohlendioxid enthaltenen Gasanteile separiert. Eine Gasbildung des aus dem Tank entnommenen siedenden Kühlmittels ist infolge des Druckabfalls und des Wärmestromes in die Rohrleitung ohne äußere Druckerhöhung oder Kühlung der Rohrleitung unvermeidlich. Es entstehen zunächst kleine Gasblasen im Kühlmittel, die während der weiteren Rohrdurchströmung infolge des wesentlich größeren spezifischen Volumens sehr rasch anwachsen und sich zu größeren Blasen vereinigen. Es bilden sich so ganze Gasbereiche aus Kolben- und Pfropfenblasen, teilweise sind sogar längere Rohrabschnitte mit Gas gefüllt. Besonders bei dünnen Kühlmittelzuleitungen ist das Verhältnis von gebildetem Gas zum Gesamtmassenstrom sehr hoch. Infolge der stark differierenden Stoffwerte von Gas und Flüssigkeit kommt es zu unterschiedlichem Strömungsverhalten in der Rohrleitung und der anschließenden Expansionsdüse. So ist z. B. die Strömungsgeschwindigkeit und der damit verbundene Volumenstrom bei Gasdurchströmung (bis zu 220 m/sec.) wesentlich höher als bei Flüssigkeitsdurchströmung (ca. zwischen 15 m/sec. und 75 m/sec.). Die auftretenden Geschwindigkeitsschwankungen verursachen zudem einen instationären Druckverlust in der Kühlmittelzuleitung, wodurch sich der Effekt der Bildung großer Gasblasen noch verstärkt. Das pulsationsartige Ausstoßen des Kühlmittelstrahls aus dem Entspannungsorgan führt weiterhin zu einer erhöhten Geräuschemission gegenüber der Strömung von einphasigem Kühlmittel. Ein erhöhter Geräuschpegel verursacht eine unangenehme Belästigung des bedienenden Personals. Außerdem können Störungen und Gefahrenquellen nicht mehr so gut wahrgenommen werden. Die Erhöhung der Strömungsgeschwindigkeit durch die Gasblasen birgt weiterhin die Gefahr, daß empfindliches weiches Kühloder Gefriergut beschädigt wird. Außerdem kann leichtes Kühloder Gefriergut von einem kräftigen Kühlmittelstrahl durch den Froster gewirbelt und somit ebenfalls beschädigt oder zerstört werden.

Durch die Trennung der Gasphase von der Flüssigkeit wird eine einphasige Strömung erreicht, bei der die Probleme von inhomogenen Strömungen vermieden werden. Die mittlere Strömungsgeschwindigkeit wird herabgesetzt, wodurch die Druckdifferenz am Ventilsitz und im Düsenhals geringer als bei einer inhomogenen Strömung ist. Somit liegt am Ende des Düsenhalses ein höherer Absolutdruck vor. Aus diesem Grunde kann der Druck im Vorratstank gegenüber einer Flüssigkeits-Gas-Gemisch-Strömung geringer, d. h. unterhalb von 18 bar, eingestellt werden, ohne daß im Düsenhals der Tripelpunktsdruck unterschritten wird. Mit der Reduzierung des Tankdrucks erhöht sich wiederum der bei der Expansion entstehende Anteil am festen $CO_2$-Schnee, was wiederum mit einer höheren Kühlleistung bei gleicher Kühlmittelmenge verbunden ist. Das im Gasabscheider abgetrennte gasförmige Kohlendioxid kann vorzugsweise über eine separate Gasleitung in die Kühl- oder Frosterkammer geleitet werden, um die Gesamtkühl-leistung des zugeführten Kühlmittels zu erhalten. Ein weiterer Vorteil dieses Gasabscheiders liegt darin, daß die Geräuschemissionen reduziert werden.

Ausführungsbeispiele der Erfindung werden im folgenden, unter Hinweis auf die beigefügten Zeichnungen, näher beschrieben. Es stellen dar:

Fig. 1      eine schematische Darstellung der Vorrichtung zum Schockfrosten von kühl- und Gefriergut,

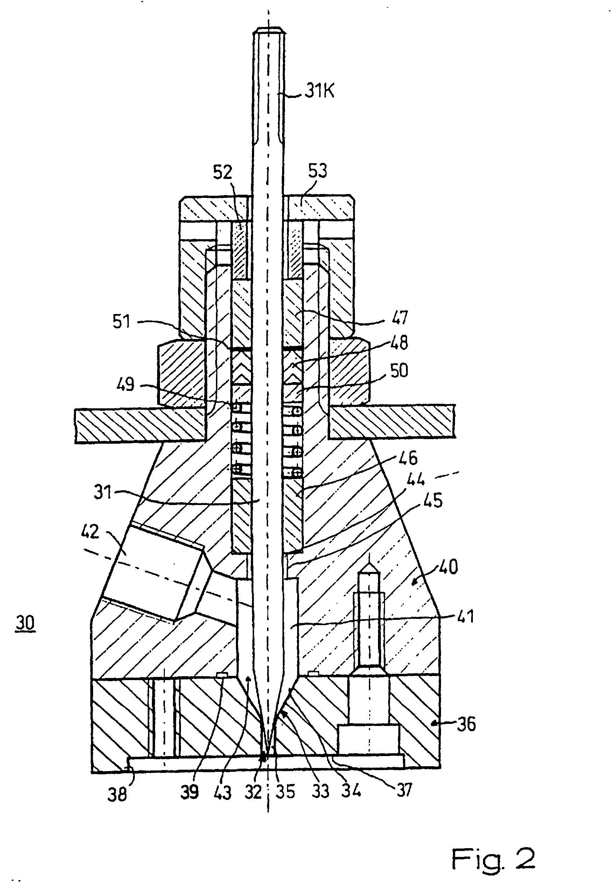

Fig. 2      einen Schnitt durch ein erfindungsgemäßes Dosierventil,

Fig. 3a      eine Unteransicht auf einen rechteckförmigen schlitzartigen Strahlformer,

Fig. 3b      einen Schnitt durch den Strahlformer aus Fig. 3a, quer zur Schlitzlängsrichtung,

Fig. 3c      einen Schnitt durch einen Strahlformer gemäß Fig. 3a entlang der Schlitzlängsrichtung,

Fig. 4      eine schematische Darstellung des Gasabscheiders,

Fig. 5      eine schematische Draufsicht auf ein mit Kühl- oder Gefriergut bestücktes Transportband in der Kühl- oder Frosterkammer und die Strahlgeometrie des auf das Transportband gesprühten Kohlendioxidstrahls.

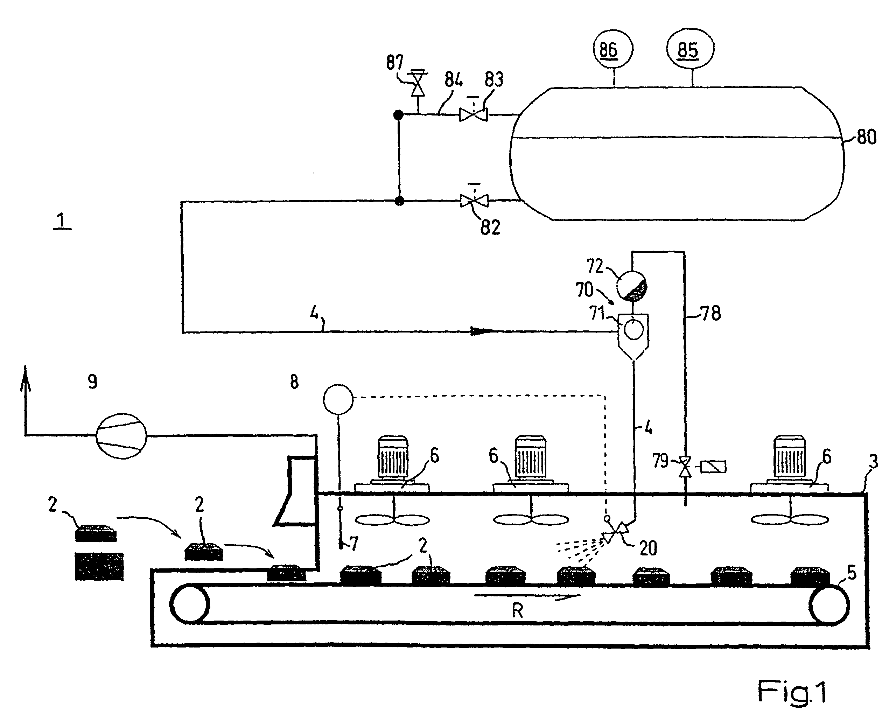

Fig. 1 zeigt eine Vorrichtung (1) zum Schockfrosten von Kühloder Gefriergut (2) mit einer Kühl- oder Frosterkammer (3), einer in die Kühl- oder Frosterkammer (3) führenden Zuleitung (4) für flüssiges Kohlendioxid ($CO_2$) und einer endseitig daran in der Kühl- oder Frosterkammer (3) angeordneten erfindüngsgemäßen Expansionsdüse (20), in welcher das flüssige Kohlendioxid entspannt wird. Der dabei entstehende Strahl aus gasförmigem $CO_2$ und $CO_2$-Schnee wird auf ein in der Kühl- oder Frosterkammer (3) befindliches Transportband (5) gesprüht, auf welchem das Kühl- oder Gefriergut (2) unter der Expansionsdüse (20) hinweggeführt wird.

Das flüssige $CO_2$ befindet sich zunächst in einem Lagertank (80). Es steht hier im Gleichgewicht mit der $CO_2$-Gasphase, die im Tank (80) oberhalb der Flüssigkeit vorliegt. Am Tank (80) befindet sich ein gesteuertes Kühlaggregat (85), welches den Druck im Tank (80) in einem Bereich von vorzugsweise ca. 18 bar hält. Es liegt dann eine Temperatur von ca. -23°C vor. Am Tank (80) befindet sich weiterhin eine Wägevorrichtung (85), mit Hilfe derer der Tankinhalt kontrollierbar ist, so daß bei Bedarf rechtzeitig Kühlmittel nachgeordert werden kann. Der Tank (80) selber ist mit einer ca. 160 - 200 mm dicken Isolierschicht aus PU-Schaum gegen einfallende Wärme und damit gegen Kälteverlust thermisch isoliert.

Von dem Tank (80) führt eine isolierte Rohrleitung (4) für das flüssige $CO_2$ zur Expansionsdüse (20) in der Kühl- oder Frosterkammer (3). Direkt hinter dem Tank (80) befindet sich in der Flüssigkeits- Rohrleitung (4) ein Absperrorgan (82). Am oberen Bereich des Tanks (80) führt eine Gasleitung (84) zur Rohrleitung (4) hinter dem Absperrorgan (82). In der Gasleitung (84) befindet sich ebenfalls direkt hinter dem Tank (80) ein Absperrorgan (83) sowie ein Überdruckventil (87). Vor einer Inbetriebnahme der Vorrichtung wird zunächst bei verschlossenem Absperrorgan (82) in der durch Öffnen des Absperrorgans (83) in der Gasleitung (84) die Flüssigkeits-Rohrleitung (4) mit gasförmigem $CO_2$ vorgespannt, d.h. die Kohlendioxidzuleitung (4) wird unter den gleichen Druck gebracht wie der Tank (80). Anschließend muß der Absperrhahn (83) wieder in der Gasleitung (84) geschlossen werden und der Flüssigkeitsabsperrhahn (82) kann geöffnet werden. Ohne dieses Vorspannen mit $CO_2$-Gas würde bei Öffnung des Flüssigkeitsabsperrhahns (82) ein so starkes Druckgefälle entstehen, daß der Tripelpunktsdruck des $CO_2$ von 5,18 bar noch innerhalb der Zuleitung (4) unterschritten wird und sich damit in der Leitung (4) $CO_2$-Schnee bildet und die Rohrleitung (4) verstopft.

Vor der Kühl- oder Frosterkammer (3) ist in die Kühlmittelzuleitung (4) ein Gasabscheider (70) zwischengeschaltet. In diesem werden die im flüssigen Kohlendioxid enthaltenen Gasanteile separiert.

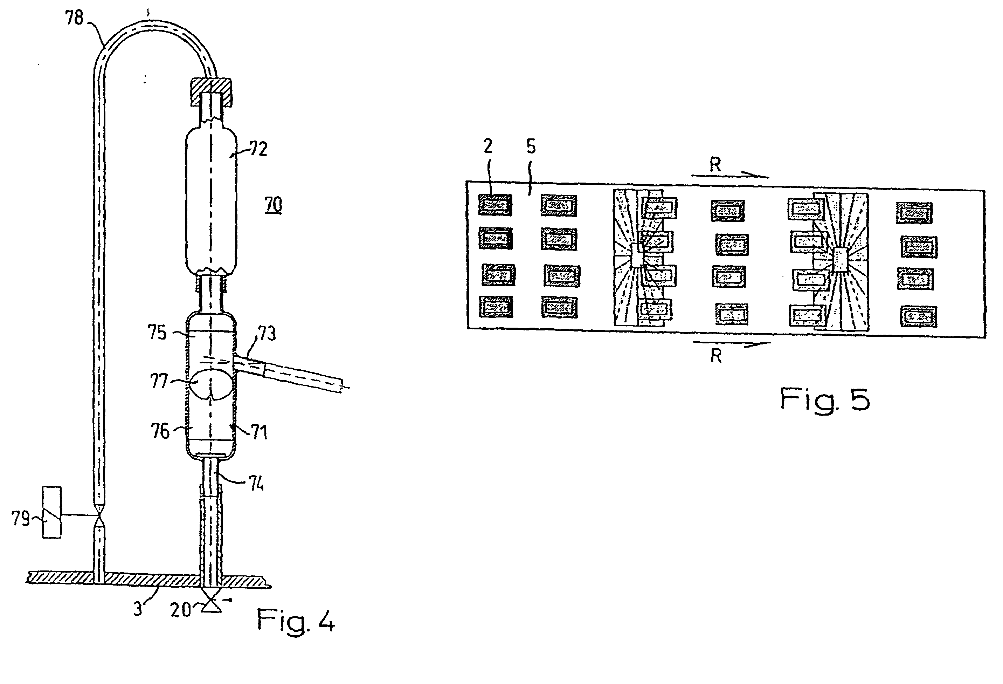

Der Gasabscheider (70) besteht aus einer zylindrischen Vorabscheidekammer (71) mit einem seitlich im oberen Bereich angeordneten Zuströmstutzen (73) für das zweiphasige Kohlendioxid und einem im unteren Bereich angeordneten Auslaßstutzen (74) für das entgaste flüssige Kohlendioxid. Der Zuströmstutzen (73) ist an der Vorabscheidekammer (71) unter einem spitzen Winkel, vorzugsweise unter 10°, schräg nach oben und tangential zur Längsachse der Vorabscheidekammer angeordnet (Fig. 4). Durch das tangential von unten einströmende $CO_2$ entsteht eine Zirkulationsströmung. Die auftretenden Zentrifugalkräfte bewirken, daß sich die Flüssigkeit an die Wandungen der Vorabscheidekammer (71) anlegt und das Gas in der Mitte sammelt, von wo es durch einen oberhalb der Vorabscheidekammer (71) angeordneten Steuerkopf (72) mit einem geregelten Ablaßventil weggeführt wird. Die Vorabscheidekammer (71) ist durch eine unterhalb des Zuströmstutzens (73) angeordnete, mit Öffnungen versehene horizontale Trennwand (77) in zwei Teilkammern (75, 76) unterteilt. Hierbei handelt es sich um ein Loch- oder Schlitzblech. Eine weitere Unterteilung in mehrere übereinanderliegende Kammern durch mehrere Trennwände ist ebenfalls möglich. Durch diese Abteilungen wird bewirkt, daß sich das Gas im oberen Teil der Vorabscheidekammer (71) ansammelt.

Der Steuerkopf (72) besteht aus einer Schwimmerkammer mit einem obenseitigen Ablaßventil, dessen Schließelement mit einem in der Schwimmerkammer befindlichen Schwimmer gekoppelt ist. Sammelt sich Gas im Steuerkopf (72), so sinkt der Schwimmer und öffnet das Ventil, so daß das Gas durch den Steuerkopf (72) entweichen kann. Das abseparierte Gas wird durch eine separate Zuleitung (78) mit einem endseitig angeordneten Magnetventil (79) der Kühl- oder Frosterkammer (3) zugeführt. Vorzugsweise ist auch diese Leitung (78) gegenüber Wärmeeinfall isoliert. Bei einer besonders bevorzugten Ausführungsform werden das vom Gasabscheider (70) kommende flüssige und das gasförmige Kohlendioxid in einer aus zwei koaxial ineinander angeordneten Rohren gebildeten Doppelrohrleitung zur Kühl- oder Frosterkammer (3) geleitet, wobei das gasförmige Kohlendioxid durch das äußere ringförmige Rohr geleitet wird. Auf diese Weise werden die Kühlverluste minimiert.

Vor der Kühl- oder Frosterkammer (3) kann in der Kühlmittelzuleitung (4) ebenfalls ein Magnetventil (nicht dargestellt) angeordnet sein, um die Zuleitung (4) bei einer längeren Betriebspause zusätzlich zu verschließen.

Die Expansionsdüse (20) besteht aus einem an der Zuleitung (4) endseitig angeordneten Dosierventil (30) und einem nachgeschalteten Strahlformer (60), welche als modulare Baueinheiten (30, 60) hintereinander geflanscht sind.

Das Dosierventil (30) besteht aus einer Ventilbasis (40) mit einer einseitig offenen, im wesentlichen zylinderförmigen Ventilkammer (41) und einer zur Ventilkammer (41) führenden Kühlmittel-Anschlußöffnung (42). Die offene Seite der Ventilkammer (41) des Dosierventils (30) wird durch eine Ventilsitzplatte (36) abgedeckt, welche mit der Ventilbasis (40) lösbar unter Einsetzen einer Dichtung (39) verbunden ist. In der Ventilsitzplatte (36) befindet sich der Ventilsitz (33), welcher einen sich in Ausströmrichtung konisch verengenden Ausströmtrichter (34) mit einem sich daran anschließenden kurzen Ausströmkanal (35) aufweist. Der Ausströmkanal (35) liegt koaxial mit der Längsachse der Ventilkammer (41). Der ventilkammerseitige Querschnitt des Ausströmtrichters (34) entspricht dem Querschnitt der Ventilkammer (41) in der Ventilbasis (40). In der Ventilbasis (40) ist koaxial durch die Ventilkammer (41) verlaufend eine Ventilnadel (31) in Nadellängsrichtung verschiebbar gelagert angeordnet. Sie ragt mit ihrer Spitze in der Schließstellung aus der offenen Seite der Ventilkammer (41) heraus und in die Austrittsöffnung (32) des Dosierventils (30) hinein. Die Ventilnadel (31) ist gegenüber dem Ventilsitz (33) in einem von der Ventilkammer (41) aus verlaufenden Führungskanal (44) aus der Ventilbasis (40) herausgeführt. Der aus der Ventilbasis (40) herausragende Ventilnadelkopf (31K) ist mit einem Stellantrieb gekoppelt, durch welchen die Ventilnadel (31) in dem Dosierventil (30) zur Regulierung des Kühlmittel-Massestroms axial bewegt wird und zum Abdichten der Kühlmittelleitung (4) in den Ventilsitz (33) gedrückt wird.

Der Führungskanal (44) ist durch eine von einem ringförmigen, sich radial nach innen erstreckenden Steg (45) gebildete Einschnürung von der Ventilkammer (41) abgetrennt. Über die Ventilnadel (31) ist in den Führungskanal (44) eine erste Führungsbuchse (46), ein Federelement (49), ein Gegenring (50), mehrere im Querschnitt dachförmige Ringdichtungen (Dachmanschetten) (48), eine zweite Führungsbuchse mit einem an der oberen Dachmanschette (48) anliegenden Sattelring (51) in der vorgenannten Reihenfolge vom Ventilnadelkopf (31K) aus eingeschoben. In den Führungsbuchsen (46, 47), welche vorzugsweise aus PTFE gefertigt sind, wird die Ventilnadel (31) nahezu radial spielfrei und axial beweglich gehalten. Oberhalb der zweiten Führungsbuchse (47) ist eine Anpreßbuchse (52) über die Ventilnadel (31) geschoben. Mittels einer Überwurfmutter (53), welche von oben über die Ventilbasis (40) aufgeschraubt wird, wird die Anpreßbuchse (52), die zweite Führungsbuchse (47) mit dem Sattelring (51), die Dachmanschetten (48) und der Gegenring (50) entgegen der Federkraft gegen die auf dem ringförmigen Steg (45) gelagerte erste Führungsbuchse (46) gepreßt. Durch das Zusammenstauchen der Dachmanschetten (48) wird der innere Rand der Dachmanschetten (48) abdichtend gegen die Ventilnadel (31) und der äußere Rand der Dachmanschetten (48) abdichtend gegen die Innenwand des Führungskanals (44) gedrückt. Auf diese Weise erfolgt eine Abdichtung der Ventilkammer (41) nach außen gegen einen Nenndruck von bis zu 20 bar. Gleichzeitig wird die Ventilnadel (31) durch die Dachmanschetten (48) zusätzlich geführt. Selbstverständlich können aber anstelle der Dachmanschetten (48) z. B. auch handelsübliche Stopfbuchsen zur Abdichtung verwendet werden.

Die Ventilsitzplatte (36) wird mit drei Schrauben direkt unter die Ventilbasis (40) geschraubt. Das System ist so ausgelegt, daß ein radiales Spiel der Ventilsitzplatte (36) bei leichtem Lösen der Befestigungsschrauben vorliegt. Hiermit läßt sich die Ventilsitzplatte (36) zur Ventilnadel (31) zentrieren. Bei der Montage des Ventils (30) ist als erstes die Ventilnadel (31) in die Ventilbasis (40) einzuführen und in axialer Richtung über ihre spätere Position bei geschlossenem Ventil (30) hinaus zu bewegen. Die Ventilsitzplatte (36) läßt sich dann gegen die Ventilnadel (31) unter die Ventilbasis (40) drücken und zentriert sich damit selbständig. Die Ventilnadel (31) sollte beim Andrehen der Befestigungsschrauben der Ventilsitzplatte (36) axial beweglich sein um ein Verbiegen der Ventilnadel (31) zu verhindern. Zwischen der Ventilsitzplatte (36) und der Ventilbasis (40) befindet sich eine Dichtung (39).

Durch die Ausführung des Ventilsitzes (33) als ein sich in Ausströmrichtung konisch verengender Ausströmtrichter (34) mit einem sich daran anschließenden kurzen Ausströmkanal (35) ist gewährleistet, daß eine gleichmäßig beschleunigte Strömung im Ventil erreicht wird. Öffnungswinkel des Ausströmtrichters (34) hat erfindungsgemäß einen Wert zwischen ca. 56° und ca. 76°, vorzugsweise 66°. Die Ventilnadel (31) läuft erfindungsgemäß unter einem Winkel zwischen ca. 16° und ca. 30° spitz zu. Der Ventilsitz (33) ist vorteilhafterweise aus einem Werkstoff gefertigt, der durch seine elastischen Eigenschaften ein dichtendes Schließen der Ventilnadel (31) ermöglicht und trotz seines weichen Verhaltens keinen erhöhten Verschleiß durch abrasive Feststoffpartikel zeigt. Wie bei der Auswahl der übrigen Werkstoffe ist auch hier auf Lebensmitteltauglichkeit und Korrosionsbeständigkeit zu achten. Als besonders geeignet hat sich für die Verwendung als Ventilsitzmaterial Polycarbonat herausgestellt.

Die Kühlmittelanschlußöffnung (42) ist seitlich und in Richtung der Ausströmöffnung (32) geneigt in die Ventilkammer (41) geführt. Dadurch wird das einströmende Kühlmittel teilweise der Strömungsrichtung in der Ventilbasis (40) angepaßt.

Im zusammengebauten Zustand der Expansionsdüse (20) geht der Ausströmkanal (35) des Ventilsitzes (33) nahtlos in einen kurzen zylindrischen Düsenhals (61) des dahinter angeordneten Strahlformers (60) über. Dem Düsenhals (61) schließt sich ein Expansionsbereich (62) mit einem divergierenden Strömungsquerschnitt an, in welchem das flüssige Kohlendioxid strahlgerichtet entspannt wird und dessen Abmessungen entsprechend der gewünschten Strahlform gewählt sind. Es ist darauf zu achten, daß beim Zusammenbau die Spitze der Ventilnadel (31) möglichst nicht in den Expansionsbereich (62) hineinragt.

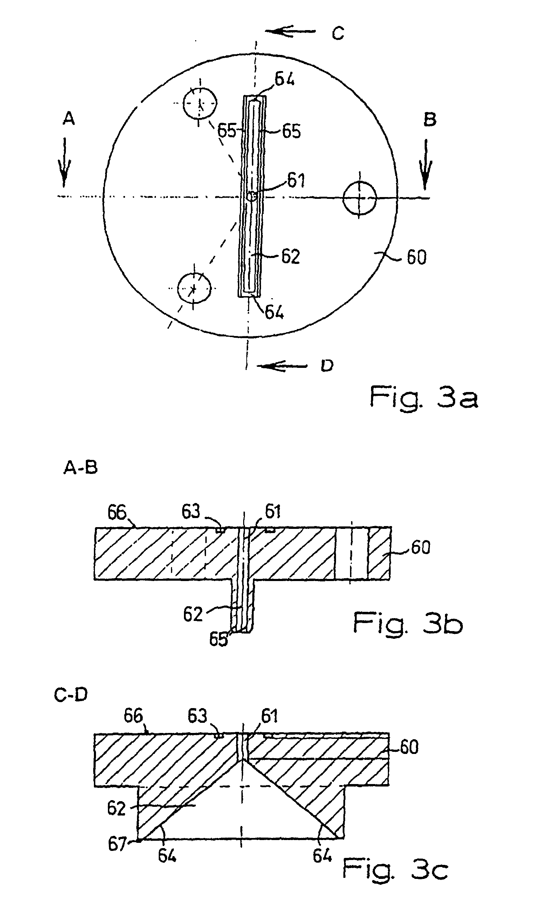

Gemäß der Fig. 3a bis 3c weist der Expansionsbereich (62) einen rechteckigen Strömungsquerschnitt auf und ist als Schlitz (62) mit zwei gegenüberliegenden divergierenden Seiten (64) und zwei gegenüberliegenden parallelen Seiten (65) ausgebildet.

Die Länge und der Durchmesser des Düsenhalses (61) bzw. auch des Ausströmkanals (35) des Ventilsitzes (33) sind so gewählt, daß der Druck des durch den Düsenhals (61) strömenden Kohlendioxids innerhalb des Düsenhalses (61) nicht unter den Tripelpunktsdruck des $CO_2$ absinkt, so daß hier zunächst noch kein $CO_2$-Schnee entsteht. Die Gesamtlänge L des Düsenhalses (61) und des Ausströmkanals (35) sind dazu entsprechend der Formel

$$L = \frac{D/2}{\tan \alpha/2}$$

mit einer Abweichung von +/- 10% gewählt, wobei D der Durchmesser des Düsenhalses (61) bzw. des Ausströmkanals (35) ist und $\alpha$ der Winkel der Ventilnadelspitze ist.

Das $CO_2$ strömt vom Düsenhals (61) in den Schlitz (62) ein und füllt dort den gesamten Schlitzquerschnitt aus. Innerhalb des Düsenschlitzes sinkt dann der Druck unter den Tripelpunkt ab, wodurch eine Phasenumwandlung von flüssigem $CO_2$ in feste $CO_2$-Schneepartikel unter plötzlich stark vermehrter Bildung von $CO_2$-Gas stattfindet. Da der Düsenschlitz (62) divergent ausgelegt ist, treten keine Verstopfungen innerhalb des Düsenschlitzes (62) auf. Mit der Strahlaufweiterung tritt außerdem eine Geschwindigkeitserhöhung in axialer Richtung und quer dazu auf, so daß die $CO_2$-Schneepartikel und das kalte $CO_2$-Gas einen größeren Impuls erhalten. Dies bewirkt, daß der Strahl nach Verlassen des Schlitzes (62) seine Richtung und Ausdehnung beibehält. Es ist so möglich, einen Flachstrahl mit rechteckigem Sprühquerschnitt zu erzeugen, welcher sich über die gesamte Breite des Transportbandes (5) in der Kühl- oder Frosterkammer (3) erstreckt.

Die Kühlleistung eines Kühlmittelstrahls ist abhängig von der Menge an ausgedüsten $CO_2$-Gas und der Beladung mit $CO_2$-Schneepartikeln. Dies gilt sowohl für den gesamten Strahl als auch für jeden einzelnen Winkel des Strahls. Ist die Verteilung von Gas und Schnee über die Strahlbreite nicht gleichmäßig, so entstehen Bereiche unterschiedlicher Abkühlintensität auf dem Transportband (5) und damit auch im Kühl- oder Gefriergut (2). Aus diesem Grunde sind die Seitenwände (64, 65) des Strahlformers (60) vorzugsweise gerade ausgebildet. Prinzipiell ist es jedoch auch möglich, die divergierenden Seitenwände (64) konkav oder mit mehreren aneinandergrenzenden konkaven Einbuchtungen (nicht dargestellt) zu versehen. Der Übergang vom Düsenhals (61) zum Schlitz (62) ist scharfkantig ausgeführt um erhöhte Schneekonzentration unter bestimmten Strahlwinkeln zu vermeiden. Der Auslauf des Strahlformers (60) ist ebenso scharfkantig ausgestaltet. Hierdurch kommt es zum Abriß des auftretenden $CO_2$-Strahls an der Kante (67). Der Strahl hält seine Richtung und Form infolge des erhaltenen Impulses bei. Die Strahlgrenzen lassen sich damit sehr genau einstellen. Um zu verhindern, daß sich infolge der Reibung des Fluids und der $CO_2$-Schneepartikel an der Wand des Schlitzes (62) der Strahlformer (60) zusetzt, sollte die Schlitzbreite vorteilhafterweise größer sein als der Durchmesser des Ventilsitzes (33).

Die Gesamtlänge des Schlitzes (62) in Strahlrichtung ist in Abhängigkeit vom Druck vor der Düse (20) und von dem Gesamtmassenstrom zu wählen.

Vorteilhafterweise ist die innere Oberfläche des Schlitzes (62) mit einer möglichst geringen Rauhtiefe gefertigt, um den $CO_2$-Schneepartikeln das Anhaften an der Oberfläche zu erschweren.

Mit dem Strahlformer (60) ist es möglich, den dreiphasig auftretenden Kühlmittelstrahl eine gewünschte Form zu geben. Dies wird hierbei nicht durch die Ablenkung eines bereits vorgegebenen Strahls erreicht, sondern durch die Selbstformung des Kühlmittelstrahls infolge der gerichteten Nachexpansion.

Um einen gleichmäßigen Strahl zu erzeugen, wird hierbei der Strahl entgegen dem eigentlichen Ziel zunächst als ein aus dem Dosierventil (30) kommender ringförmiger Strahl zusammengeführt, um sich dann aus dem Strömungskern heraus gleichmäßig zu verteilen.

Die Anschlußfläche (37) des Dosierventils (30) ist mit einer Passung (38) versehen, so daß der Strahlformer (60) zentriert über ebenfalls drei Schrauben mit dem Dosierventil (30) verbunden werden kann. Diese drei Schrauben zur Verbindung des Dosierventils mit dem Strahlformer (60) liegen entsprechend verdreht zu den drei Schrauben, mit denen die Ventilsitzplatte (36) an der Ventilbasis (40) befestigt wird. Zwischen Strahlformer (60) und Dosierventil (30) kann ebenfalls eine Dichtung (63) angeordnet sein.

Bei einem bevorzugten Ausführungsbeispiel gemäß Fig. 5 befinden sich in der Kühl- oder Frosterkammer (3) oberhalb des Transportbandes (5) zwei Expansionsdüsen (20) in Transportrichtung (R) hintereinander angeordnet. Eine der Expansionsdüsen (20) ist unter 45° schräg nach unten auf das Transportband (5) in Transportrichtung und die andere der Expansionsdüsen (20) schräg nach unten entgegen der Transportrichtung (R) auf das Transportband (5) gerichtet. Dadurch wird das Kühl- oder Gefriergut (2) auch auf der vorderen und hinteren Seite mit dem Sprühstrahl beaufschlagt. Beide Expansionsdüsen (20) erzeugen einen rechteckigen Strahlquerschnitt, der sich nahezu über die gesamte Breite des Transportbandes (5) erstreckt. Das nebeneinander auf dem Transportband (5) befindliche Kühl- oder Gefriergut (2) hat dann unabhängig von der Lage auf dem Transportband (5) immer die gleiche Wegstrecke durch den Sprühstrahl zurückzulegen, so daß eine gleichmäßige Kühlung des Kühlguts (2) erfolgt. Selbstverständlich ist es auch möglich, mehrere quer zur Transportrichtung (R) nebeneinander angeordnete Expansionsdüsen (20) zu Sprühleisten zusammenzufassen um so breitere Transportbänder zu besprühen.

Ebenso ist natürlich auch der Aufbau einer Kühl- oder Frosterkammer (3) mit nur einer Expansionsdüse möglich.

In der Kühl- oder Frosterkammer (3) befinden sich Ventilatoren (6) um für eine starke Verwirbelung und damit für eine gute Durchmischung der Frosterkammeratmosphäre zu sorgen. Dadurch wird eine gleichmäßige Hintergrundtemperatur erzeugt. Weiterhin befindet sich in der Kühl- oder Frosterkammer (3) ein Temperatursensor (7), welcher mit einer Steuervorrichtung (8) verbunden ist, die den Stellantrieb der Expansionsdüsen (20) regelt. Um das zuströmende $CO_2$ nach der Erwärmung aus der Kühl- oder Frosterkammer (3) wieder abzuführen, weist die Kühl- oder Frosterkammer (3) einen Abzug mit einem Ventilator (9) auf.

**Patentansprüche**

1. Expansionsdüse (20) zur Erzeugung von Kohlendioxidschnee zur Besprühung von Kühl- oder Gefriergut (2), wobei die Expansionsdüse (20) ein integriertes Dosierventil (30) mit einer Ausströmöffnung (32) mit einem zuströmseitigen Ventilsitz (33) und einer gegenüber diesem Ventilsitz (33) verstellbaren, das Dosierventil (30) in Ausströmrichtung verschließenden, im geschlossenen Zustand in die Ausströmöffnung (32) des Dosierventils (30) hineinragenden Ventilnadel (31) aufweist,
**dadurch gekennzeichnet, daß** der Ventilsitz (33) einen sich in Ausströmrichtung konisch verengenden Ausströmtrichter (34) mit einem sich daran anschließenden kurzen Ausströmkanal (35) aufweist, daß der Ausströmtrichter (34) des Ventilsitzes (33) einen Öffnungswinkel zwischen ca. 56° und ca. 76°, vorzugsweise 66°, aufweist und daß die Ventilnadel (31) unter einem Winkel zwischen ca. 16° und ca. 30° spitz zuläuft.

2. Expansionsdüse nach Anspruch 1, **dadurch gekennzeichnet, daß** das Dosierventil (30) eine Ventilbasis (40) mit einer einseitig offenen Ventilkammer (41) und einer zur Ventilkammer (41) führenden Kühlmittelanschlußöffnung (42) aufweist, und daß im zusammengebauten Zustand des Dosierventils (30) die offene Seite (43) der Ventilkammer (41) durch eine den Ventilsitz (33) enthaltende Ventilsitzplatte (36) abgedeckt ist, welche mit der Ventilbasis (40) lösbar verbunden ist.

3. Expansionsdüse nach Anspruch 1 oder 2, **dadurch gekennzeichnet,**
**daß** die Ventilnadel (31) in einem gegenüber dem Ventilsitz (33) von der Ventilkammer (41) aus verlaufenden Führungskanal (44) aus der Ventilbasis (40) herausgeführt ist,
**daß** der aus der Ventilbasis (40) herausragende Ventilnadelkopf (31K) mit einem Stellantrieb gekoppelt ist,
**daß** die Ventilnadel (31) durch mindestens zwei in dem Führungskanal (44) angeordnete Führungsbuchsen (46, 47) radial spielfrei, axial beweglich gelagert ist und im Führungskanal (44), vorzugsweise zwischen den Führungsbuchsen (46, 47) mindestens eine im Querschnitt dachförmige Ringdichtung, welche als Dachmanschette (48) ausgebildet ist, angeordnet ist, welche zur Abdichtung axial gestaucht ist, wobei der innere Rand der Dachmanschette (48) abdichtend gegen die Ventilnadel (31) und der äußere Rand der Dachmanschette (48) abdichtend gegen die Innenwand des Führungskanals (44) gedrückt wird.

4. Expansionsdüse nach Anspruch 3, **dadurch gekennzeichnet, daß** der Führungskanal (44) durch eine von einem ringförmigen sich radial nach innen erstreckenden Steg (45) gebildete Einschnürung von der Ventilkammer (41) abgetrennt ist, und über die Ventilnadel (31) in den Führungskanal (44) die erste Führungsbuchse (46), ein Federelement (49), ein eine Basis für die Dachmanschette (48) bildender Gegenring (50), die Dachmanschette (48) und die zweite Führungsbuchse (47) mit einem an der Dachmanschette (48) anliegenden Sattelring (51) in der vorgenannten Reihenfolge vom Ventilnadelkopf (31K) aus eingeschoben sind und die zweite Führungsbuchse (47) mit dem Sattelring (51), der Dachmanschette (48) und dem Gegenring (50) mittels mindestens eines Schraub- und/oder Klemmelements (52, 53) entgegen der Federkraft gegen die auf dem ringförmigen Steg (45) gelagerte erste Führungsbuchse (46) gepreßt sind.

5. Expansionsdüse nach einem oder mehreren der vorstehenden Ansprüche, **dadurch gekennzeichnet, daß** sich an den Ausströmkanal (35) ein sich endseitig im Querschnitt erweiternder Düsenabschnitt als Strahlformer (60) anschließt, in welchem das flüssige Kohlendioxid strahlgerichtet entspannt wird.

6. Expansionsdüse nach Anspruch 5, **dadurch gekennzeichnet, daß** der Strahlformer (60) ventilseitig einen kurzen, zylindrischen, einen Düsenhals (61) bildenden Kanal (61) und einen sich daran anschließenden Expansionsbereich (62) mit einem divergierenden Strömungsquerschnitt, dessen Abmessungen entsprechend der gewünschten Strahlform gewählt sind, aufweist.

7. Expansionsdüse nach Anspruch 6, **dadurch gekennzeichnet, daß** der Expansionsbereich (62) einen rechteckigen Strömungsquerschnitt aufweist.

8. Expansionsdüse nach Anspruch 7, **dadurch gekennzeichnet, daß** der Expansionsbereich (62) als Schlitz (62) mit zwei gegenüberliegenden divergierenden Seiten (64) und zwei gegenüberliegenden parallelen Seiten (65) ausgebildet ist.

9. Expansionsdüse nach einem der Ansprüche 6 bis 8, **dadurch gekennzeichnet, daß** der Durchmesser des Düsenhalses (61) in Abhängigkeit von der Nennweite des Dosierventils (30) und den gewünschten Betriebsparametern in der Kühl- oder Frosterkammer (3) und die Länge des Düsenhalses (61) in Abhängigkeit von der Nennweite des Dosierventils (30), des Winkels der Ventilnadel (31) und dem Hub des Stellantriebs der Ventilnadel (31) so gewählt sind, daß der Druck des durch den Düsenhals (61) strömenden Kohlendioxid innerhalb des Düsenhalses (61) nicht unter den Tripelpunktsdruck des Kohlendioxids absinkt.

10. Expansionsdüse nach einem oder mehreren der Ansprüche 6 bis 9, **dadurch gekennzeichnet, daß** der Düsenhals (61) des Strahlformers (60) den gleichen Durchmesser aufweist wie der Ausströmkanal (35) des Ventilsitzes (33) und sich im zusammengebauten Zustand nahtlos an diesen anschließt und die Gesamtlänge des Düsenhalses (61) und des Ausströmkanals (35) ungefähr dem halben Durchmesser dividiert durch den Tangens des halben Winkels der Nadelspitze entspricht.

11. Expansionsdüse nach einem oder mehreren der Ansprüche 6 bis 10, **dadurch gekennzeichnet, daß** die Länge des Düsenhalses (61) und/oder des Ausströmkanals (35) gekoppelt mit der Lage der Ventilnadel (31) veränderlich ist.

12. Expansionsdüse nach einem oder mehreren der Ansprüche 5 bis 11, **dadurch gekennzeichnet, daß** das Dosierventil (30) und der Strahlformer (60) als modulare Baueinheiten (30, 60) der Expansionsdüse (20) hintereinandergeflanscht sind.

13. Expansionsdüse nach Anspruch 12, **dadurch gekennzeichnet, daß** die Anschlußflächen (37, 66) des Dosierventils (30) und des Strahlformers (60) unter Passung (38) zentriert ineinanderfassen.

14. Verfahren zur Erzeugung von Kohlendioxidschnee zur Besprühung von Kühl- und Gefriergut (2) mit der Expansionsdüse nach Anspruch 1, **dadurch gekennzeichnet, daß** der Kohlendioxid-Massestrom direkt in der Expansionsdüse (20) gemäß einer jeweiligen Einstellung der Ventilnadel (31) zum Ventilsitz (33) kontinuierlich stufenlos dosiert wird.

15. Verfahren nach Anspruch 14, **dadurch gekennzeichnet, daß** der Kohlendioxid-Massestrom innerhalb der Expansionsdüse (20) im Dosierventil (30) zunächst durch eine ringförmige Dosierstelle geleitet und dann zusammengeführt und anschließend unter Bildung des Kohlendioxidschnees gerichtet entspannt wird.

16. Vorrichtung mit der Expansionsdüse (20) nach einem der Ansprüche 1 - 13, **dadurch gekennzeichnet, daß** zum Kühlen oder Schockfrosten von Kühl- oder Gefriergut (2) mit Kohlendioxidschnee eine Zuleitung (4) flüssiges Kohlendioxid in eine Kühl- und Frosterkammer (3) und dort an das Dosierventil (30) führt, das den Zufluß in die Expansionsdüse (20) regelt, in das das Dosierventil (30) integriert ist.

17. Vorrichtung nach Anspruch 16, **dadurch gekennzeichnet, daß** in der Kühl- oder Frosterkammer (3) oberhalb einer Transportvorrichtung (5) für das Kühl- oder Gefriergut (2), insbesondere einem Transportband (5), mehrere der Expansionsdüsen (20) an die Zuleitung (4) für das flüssige Kohlendioxid angeschlossen sind.

18. Vorrichtung nach Anspruch 17, **dadurch gekennzeichnet, daß** oberhalb der Transportvorrichtung (5) mindestens zwei der Expansionsdüsen (20) in Transportrichtung (R) hintereinander angeordnet sind, und mindestens eine davon schräg nach unten auf die Transportvorrichtung (5) in Transportrichtung (R) und mindestens eine andere schräg nach unten auf die Transportvorrichtung (5) entgegen der Transportrichtung (R) gerichtet ist.

19. Vorrichtung nach einem der Ansprüche 16 bis 18, **dadurch gekennzeichnet, daß** in der Zuleitung (4) für das flüssige Kohlendioxid ein Gasabscheider (70) zwischengeschaltet ist, welcher die im flüssigen Kohlendioxid enthaltenen Gasanteile separiert.

20. Vorrichtung nach Anspruch 19, **dadurch gekennzeichnet, daß** der Gasabscheider (70) aus einer Vorabscheidekammer (71) mit einem seitlich im oberen oder mittleren Bereich angeordneten Zuströmstutzen (73) für das zweiphasige Kohlendioxid und einem im unteren Bereich angeordneten Auslaßstutzen (74) für das entgaste flüssige Kohlendioxid besteht, in welchem die Gas- und die Flüssigphase voneinander getrennt werden und in welchem sich im oberen Bereich (75) das abgetrennte gasförmige Kohlendioxid sammelt und über einen obenseitig angeordneten Steuerkopf (72) mit einem geregelten Ablaßventil weggeführt wird.

21. Vorrichtung nach Anspruch 20, **dadurch gekennzeichnet, daß** der Zuströmstutzen (73) zur Erzeugung einer Zirkulationsströmung in der Vorabscheidekammer (71) schräg nach oben und tangential zur Längsachse der zylindrischen Vorabscheidekammer (71) an dieser angeordnet ist.

22. Vorrichtung nach Anspruch 20 oder 21, **dadurch gekennzeichnet, daß** die Vorabscheidekammer (71) durch mindestens eine unterhalb des Zuströmstutzens (73) angeordnete, mit Öffnungen versehene, quer zur Längsrichtung der Vorabscheidekammer liegende Trennwand (77) in mindestens zwei Teilkammern (75, 76) unterteilt ist.

23. Vorrichtung nach einem der Ansprüche 20 bis 22, **dadurch gekennzeichnet, daß** der Steuerkopf (72) aus einer Schwimmerkammer mit einem obenseitigen Ablaßventil besteht, dessen Schließelement mit einem in der Schwimmerkammer befindlichen Schwimmer gekoppelt ist, und bei einer oberen Position des Schwimmers in der Schwimmerkammer das Ablaßventil geschlossen und bei einer unteren Position des Schwimmers geöffnet ist.

**24.** Vorrichtung nach einem der Ansprüche 19 bis 23, **dadurch gekennzeichnet, daß** das im Gasabscheider (70) abgetrennte gasförmige Kohlendioxid über eine separate Gasleitung (78) in die Kühl- oder Frosterkammer (3) geleitet wird.

**25.** Vorrichtung nach Anspruch 24, **dadurch gekennzeichnet, daß** in der Gasleitung (78) vor der Kühl- oder Frosterkammer (3) ein Absperrorgan (79) angeordnet ist.

**26.** Vorrichtung nach Anspruch 24 oder 25, **dadurch gekennzeichnet, daß** das vom Gasabscheider (70) kommende flüssige und das gasförmige Kohlendioxid in einer aus zwei koaxial ineinander angeordneten Rohren gebildeten Doppelrohrleitung zur Kühl- oder Frosterkammer (3) geleitet werden, wobei das gasförmige Kohlendioxid durch das äußere ringförmige Rohr geleitet wird.

**27.** Vorrichtung nach einem der Ansprüche 19 bis 26, **dadurch gekennzeichnet, daß** in der Zuleitung für das flüssige Kohlendioxid hinter dem Gasabscheider und vor der Kühl- oder Frosterkammer (3) ein Absperrorgan angeordnet ist.

**Claims**

**1.** Expansion nozzle (20) for producing carbon dioxide snow for spraying material to be cooled or frozen, the expansion nozzle (20) having an integrated metering valve (30) with an outlet opening (32) having an inlet-side valve seat (33) and a valve needle (31), which can be adjusted with respect to this valve seat (33), closes the metering valve (30) in the outlet direction and in the closed position projects into the outlet opening (32) of the metering valve (30), **characterized in that** the valve seat (33) has an outlet funnel (34), which narrows conically in the outlet direction and has an adjoining short outlet passage (35), **in that** the outlet funnel (34) of the valve seat (33) has an aperture angle of between approx. 56° and approx. 76°, preferably 66°, and **in that** the valve needle (31) tapers to a point at an angle of between approx. 16° and approx. 30°.

**2.** Expansion nozzle according to Claim 1, **characterized in that** the metering valve (30) has a valve base (40) with a valve chamber (41) which is open on one side and a coolant connection opening (42) which leads to the valve chamber (41), and **in that** in the assembled state of the metering valve (30) the open side (43) of the valve chamber (41) is covered by a valve seat plate (36) which includes the valve seat (33) and is releasably connected to the valve base (40).

**3.** Expansion nozzle according to Claim 1 or 2, **characterized in that** the valve needle (31) is led out of the valve base (40) in a guide passage (44) which runs out of the valve chamber (41) on the opposite side from the valve seat (33), **in that** the valve needle head (31K) which projects out of the valve base (40) is coupled to an actuating drive, **in that** the valve needle (31) is mounted so that it can move in the axial direction, without radial play, through at least two guide bushes (46, 47) arranged in the guide passage (44), and at least one annular seal, which is roof-shaped in cross section and is designed as a roof sleeve (48), which is axially compressed to provide a seal, is arranged in the guide passage (44), preferably between the guide bushes (46, 47), the inner edge of the roof sleeve (48) being pressed onto the valve needle (31) so as to form a seal, and the outer edge of the roof sleeve (48) being pressed onto the inner wall of the guide passage (44) so as to form a seal.

**4.** Expansion nozzle according to Claim 3, **characterized in that** the guide passage (44) is separated from the valve chamber (41) by a constriction which is formed by an annular web (45) extending radially inwards, and by means of the valve needle (31) the first guide bush (46), a spring element (49), a mating ring (50) which forms a base for the roof sleeve (48), the roof sleeve (48) and the second guide bush (47) with a saddle ring (51) bearing against the roof sleeve (48) are pushed into the guide passage (44) in the above order starting from the valve needle head (31K), and the second guide bush (47) with the saddle ring (51), the roof sleeve (48) and the mating ring (50) are pressed onto the first guide bush (46), which is mounted on the annular web (45), counter to the spring force, by means of at least one screw and/or clamping element (52, 53).

**5.** Expansion nozzle according to one or more of the preceding claims, **characterized in that** the outlet passage (35) is adjoined by a nozzle section, which widens in cross section at the end, as jet shaper (60), in which the liquid carbon dioxide is expanded as a targeted jet.

**6.** Expansion nozzle according to Claim 5, **characterized in that** the jet shaper (60), on the valve side, has a short, cylindrical passage (61) which forms a nozzle neck (61) and an adjoining expansion region (62) with a divergent cross-section of flow, the dimensions of which are selected according to the desired jet shape.

7. Expansion nozzle according to Claim 6, **characterized in that** the expansion region (62) has a rectangular cross section of flow.

8. Expansion nozzle according to Claim 7, **characterized in that** the expansion region (62) is designed as a slot (62) with two opposite divergent sides (64) and two opposite parallel sides (65).

9. Expansion nozzle according to one of Claims 6 to 8, **characterized in that** the diameter of the nozzle neck (61) is selected as a function of the nominal width of the metering valve (30) and the desired operating parameters in the cooling or freezing chamber (3), and the length of the nozzle neck (61) is selected as a function of the nominal width of the metering valve (30), of the angle of the valve needle (31) and the travel of the actuating drive of the valve needle (31), in such a way that the pressure of the carbon dioxide which flows through the nozzle neck (61) does not drop below the triple point pressure of the carbon dioxide within the nozzle neck (61).

10. Expansion nozzle according to one or more of Claims 6 to 9, **characterized in that** the nozzle neck (61) of the jet shaper (60) has the same diameter as the outlet passage (35) of the valve seat (33) and, in the assembled state, seamlessly adjoins it, and the overall length of the nozzle neck (61) and of the outlet passage (35) corresponds to approximately half the diameter divided by the tangent of half the angle of the needle tip.

11. Expansion nozzle according to one or more of Claims 6 to 10, **characterized in that** the length of the nozzle neck (61) and/or of the outlet passage (35) can be varied with the position of the valve needle (31).

12. Expansion nozzle according to one or more of Claims 5 to 11, **characterized in that** the metering valve (30) and the jet shaper (60) are flanged on one behind the other as modular units (30, 60) of the expansion nozzle (20).

13. Expansion nozzle according to Claim 12, **characterized in that** the connection surfaces (37, 66) of the metering valve (30) and of the jet shaper (60) engage in one another in a centred position with a press fit (38).

14. Process for producing carbon dioxide snow for spraying material which is to be cooled and frozen (2) using the expansion nozzle according to Claim 1, **characterized in that** the mass flow of carbon dioxide is metered continuously in a step-free manner directly in the expansion nozzle (20) according to a current position of the valve needle (31) with respect to the valve seat (33).

15. Process according to Claim 14, **characterized in that** the carbon dioxide mass flow within the expansion nozzle (20) is first of all passed through an annular metering location within the expansion nozzle (20) in the metering valve (30) and is then brought together and then expanded in targeted fashion to form the carbon dioxide snow.

16. Device having the expansion nozzle (20) according to one of Claims 1 - 13, **characterized in that** for cooling or fast-freezing of material which is to be cooled or frozen (2) using carbon dioxide snow, a feed line (4) passes liquid carbon dioxide into a cooling and freezing chamber (3) and from there to the metering valve (30), which regulates the flow into the expansion nozzle (20), in which the metering valve (30) is integrated.

17. Device according to Claim 16, **characterized in that**, in the cooling or freezing chamber (3), a plurality of the expansion nozzles (20) are connected to the feed line (4) for the liquid carbon dioxide above a conveying device (5) for the material which is to cooled or frozen (2), in particular a conveyor belt (5).

18. Device according to Claim 17, **characterized in that** above the conveying device (5) at least two of the expansion nozzles (20) are arranged one behind the other in the conveying direction (R), and at least one of these nozzles is directed obliquely downwards onto the conveying device (5) in the conveying direction (R) and at least one other of these nozzles is directed obliquely downwards onto the conveying device (5) in the opposite direction to the conveying direction (R).

19. Device according to one of Claims 16 to 18, **characterized in that** a gas separator (70) is connected into the feed line (4) for the liquid carbon dioxide and separates out the gas fractions which are present in the liquid carbon dioxide.

20. Device according to Claim 19, **characterized in that** the gas separator (70) comprises a preliminary separation chamber (71), having an inlet connection piece (73), which is arranged on the side in the upper or central region, for the two-phase carbon dioxide and a discharge connection piece (74), which is arranged in the lower region, for the degassed liquid carbon dioxide, in which the gas and liquid phase are separated from one another and in which the gaseous carbon dioxide which has been separated out collects in the upper region (75) and is removed via a control head (72) which is arranged at the top and has a regulated outlet valve.

21. Device according to Claim 20, **characterized in that** the inlet connection piece (73), in order to generate a circulating flow in the preliminary separation chamber (71), is arranged on the cylindrical preliminary separation chamber (71), running obliquely upwards and tangentially with respect to the longitudinal axis of the cylindrical preliminary separation chamber.

22. Device according to Claim 20 or 21, **characterized in that** the preliminary separation chamber (71) is divided into at least two subchambers (75, 76) by at least one partition wall (77) which is arranged beneath the inlet connection piece (73), is provided with openings and lies transversely with respect to the longitudinal direction of the preliminary separation chamber.

23. Device according to one of Claims 20 to 22, **characterized in that** the control head (72) comprises a float chamber with an outlet valve at the top, the closure element of which is coupled to a float located in the float chamber, the outlet valve being closed when the float is in an upper position in the float chamber and open when the float is in a lower position.

24. Device according to one of Claims 19 to 23, **characterized in that** the gaseous carbon dioxide which is separated out in the gas separator (70) is passed via a separate gas line (78) into the cooling or freezing chamber (3).

25. Device according to Claim 24, **characterized in that** a blocking member (79) is arranged in the gas line (78) upstream of the cooling or freezing chamber (3).

26. Device according to Claim 24 or 25, **characterized in that** the liquid carbon dioxide which comes from the gas separator (70) and the gaseous carbon dioxide are passed to the cooling or freezing chamber (3) in a double pipeline, which is formed from two pipes arranged coaxially one inside the other, the gaseous carbon dioxide being passed through the outer, annular pipe.

27. Device according to one of Claims 19 to 26, **characterized in that** a blocking member is arranged in the feed line for the liquid carbon dioxide, downstream of the gas separator and upstream of the cooling or freezing chamber (3).

**Revendications**

1. Ajutage de détente (20) pour la production de neige carbonique destinée à être pulvérisée sur un produit (2) à refroidir ou à congeler, l'ajutage de détente (20) présentant une soupape de dosage intégrée (30) dotée d'une ouverture (32) de sortie d'écoulement, d'un siège de soupape (33) situé du côté de l'entrée de l'écoulement et un pointeau de soupape (31) qui peut être ajusté par rapport à ce siège de soupape (33), qui referme la soupape de dosage (30) dans la direction de la sortie de l'écoulement et qui, dans la position de fermeture, pénètre dans l'ouverture (32) de sortie d'écoulement de la soupape de dosage (30),
    **caractérisé en ce que**
    le siège de soupape (33) présente un entonnoir de sortie d'écoulement (34) qui se rétrécit coniquement dans la direction de sortie de l'écoulement et auquel se raccorde un court canal (35) de sortie d'écoulement, **en ce que** l'entonnoir de sortie d'écoulement (34) du siège de soupape (33) présente un angle d'ouverture compris entre environ 56° et environ 76°, de préférence de 66°, et **en ce que** le pointeau de soupape (31) se rétrécit en pointe sous un angle compris entre environ 16° et environ 30°.

2. Ajutage de détente selon la revendication 1, **caractérisé en ce que** la soupape de dosage (30) présente un socle de soupape (40) doté d'une chambre de soupape (41) ouverte d'un côté ainsi qu'une ouverture (42) de raccordement de fluide frigorifique qui conduit à la chambre de soupape (41), et **en ce que** lorsque la soupape de dosage (30) est assemblée, le côté ouvert (43) de la chambre de soupape (41) est recouvert par une plaque (36) de siège de soupape qui contient le siège de soupape (33) et qui est reliée de manière libérable au socle de soupape (40).

3. Ajutage de détente selon la revendication 1 ou 2, **caractérisé en ce que** le pointeau de soupape (31) déborde hors du socle de soupape (40) dans un canal de guidage (44), qui part de la chambre de soupape (41) et se prolonge dans le siège de soupape (33), **en ce que** la tête (31K) du pointeau de soupape qui déborde du socle de soupape (40) est accouplée à un mécanisme de commande et **en ce que** le pointeau de soupape (31) est monté à déplacement axial et sans jeu radial par au moins deux douilles de guidage (46, 47) disposées dans le canal de guidage (44) et au moins un joint d'étanchéité annulaire qui présente en section transversale la forme d'un toit, qui est configuré comme manchette (48) en forme de toit, qui est disposé dans le canal de guidage (44) de préférence entre les douilles de guidage (46, 47) et qui est comprimé axialement pour réaliser l'étanchéité, le bord intérieur de la manchette (48) en forme de toit étant repoussé de manière étanche contre le pointeau de soupape (31) et le bord extérieur de la manchette (48) en forme de toit étant repoussé de manière étanche contre la paroi intérieure du canal de guidage (44).

4.  Ajutage de détente selon la revendication 3, **caractérisé en ce que** le canal de guidage (44) est séparé de la chambre de soupape (41) par un rétrécissement formé d'un épaulement (45) de forme annulaire qui s'étend radialement vers l'intérieur, et le long du pointeau de soupape (31) dans le canal de guidage (44), la première douille de guidage (46), un élément de ressort (49), un contre-anneau (50) qui forme une base pour la manchette (48) en forme de toit, la manchette (48) en forme de toit et la deuxième douille de guidage (47) avec un anneau d'appui (51) qui repose contre la manchette (48) en forme de toit sont insérés dans la succession ci-dessus depuis la tête (31K) du pointeau de soupape, tandis que la deuxième douille de guidage (47) avec l'anneau d'appui (51), la manchette (48) en forme de toit et le contre-anneau (50) sont repoussés en opposition à la force du ressort contre la première douille de guidage (46) montée sur l'épaulement (45) de forme annulaire, au moyen d'au moins un élément fileté et/ou d'un élément de serrage (52, 53).

5.  Ajutage de détente selon l'une ou plusieurs des revendications précédentes, **caractérisé en ce qu'**une partie de l'ajutage, dont la section transversale s'agrandit du côté de l'extrémité et qui sert de moyen (60) de formation du jet dans lequel le dioxyde de carbone liquide est détendu suivant un jet orienté, se raccorde au canal (35) de sortie d'écoulement.

6.  Ajutage de détente selon la revendication 5, **caractérisé en ce que** du côté de la soupape, le moyen (60) de formation du jet présente un court canal cylindrique (61) qui forme un collet d'ajutage (61) et une zone de détente (62) qui s'y raccorde et qui présente une section transversale d'écoulement divergente dont les dimensions sont sélectionnées en fonction de la forme souhaitée du jet.

7.  Ajutage de détente selon la revendication 6, **caractérisé en ce que** la zone de détente (62) présente une section transversale d'écoulement de forme rectangulaire.

8.  Ajutage de détente selon la revendication 7, **caractérisé en ce que** la zone de détente (62) est configurée comme fente (62) qui présente deux côtés opposés divergents (64) et deux côtés opposés parallèles (65).

9.  Ajutage de détente selon l'une des revendications 6 à 8, **caractérisé en ce que** le diamètre du collet d'ajutage (61) est sélectionné en fonction de la taille nominale de la soupape de dosage (30) et des paramètres de fonctionnement souhaités dans la chambre (3) de refroidissement ou de congélation, la longueur du collet d'ajutage (61) étant sélectionnée en fonction de la taille nominale de la soupape de dosage (30), de l'angle du pointeau de soupape (31) et de la course du mécanisme de commande du pointeau de soupape (31) de telle sorte qu'à l'intérieur du collet d'ajutage (61), la pression du dioxyde de carbone qui s'écoule dans le collet d'ajutage (61) ne descende pas en dessous de la pression du point triple du dioxyde de carbone.

10. Ajutage de détente selon l'une ou plusieurs des revendications 6 à 9, **caractérisé en ce que** le collet d'ajutage (61) du moyen (60) de formation du jet présente le même diamètre que le canal de sortie d'écoulement (35) du siège de soupape (33) et, dans la position assemblée, se prolonge sans discontinuité en ce dernier, la longueur totale du collet d'ajutage (61) et du canal (35) de sortie d'écoulement correspondant environ à la moitié du diamètre divisée par la tangente de la moitié de l'angle de la pointe du pointeau.

11. Ajutage de détente selon l'une ou plusieurs de revendications 6 à 10, **caractérisé en ce que** la longueur du collet d'ajutage (61) et/ou du canal (35) de sortie d'écoulement peut être modifiée d'une manière couplée à la position du pointeau de soupape (31).

12. Ajutage de détente selon l'une ou plusieurs des revendications 5 à 11, **caractérisé en ce que** la soupape de dosage (30) et le moyen (60) de formation du jet sont assemblés l'un derrière l'autre par brides en forme de composants modulaires (30, 60) de l'ajutage de détente (20).

13. Ajutage de détente selon la revendication 12, **caractérisé en ce que** les surfaces de raccordement (37, 36) de la soupape de dosage (30) et du moyen (60) de formation du jet s'engagent l'une dans l'autre de manière centrée à l'aide d'un ajustement (38).

14. Procédé pour la production de neige carbonique destinée à être projetée sur un produit (2) à refroidir ou à congeler, à l'aide de l'ajutage de détente selon la revendication 1, **caractérisé en ce que** l'écoulement massique de dioxyde de carbone est dosé directement, de manière continue et sans discontinuité dans l'ajutage de détente (20) par un positionnement correspondant du pointeau de soupape (31) par rapport au siège de soupape (33).

**15.** Procédé selon la revendication 14, **caractérisé en ce que** l'écoulement massique de dioxyde de carbone à l'intérieur de l'ajutage de détente (20) est d'abord conduit dans la soupape de dosage (30) par un emplacement de dosage de forme annulaire et est ensuite rassemblé et détendu de manière orientée pour former la neige carbonique.

**16.** Dispositif présentant l'ajutage de détente (20) selon l'une des revendications 1 à 13, **caractérisé en ce que** pour le refroidissement ou la congélation rapide d'un produit (2) à refroidir ou à congeler à l'aide de neige carbonique, un conduit d'amenée (4) amène du dioxyde de carbone liquide dans une chambre de refroidissement et de congélation (3) et de là dans la soupape de dosage (30) qui régule l'écoulement apporté dans l'ajutage de détente (20) dans lequel la soupape de dosage (30) est intégrée.

**17.** Dispositif selon la revendication 16, **caractérisé en ce que** plusieurs des ajutages de détente (20) raccordés au conduit (4) d'amenée de dioxyde de carbone liquide sont disposés dans la chambre de refroidissement ou de congélation (3) au-dessus d'un dispositif de transport (5), en particulier une bande transporteuse (5), pour le produit (2) à refroidir ou à congeler.

**18.** Dispositif selon la revendication 17, **caractérisé en ce qu'**au moins deux des ajutages de détente (20) sont disposés l'un derrière l'autre dans la direction de transport (R) et au-dessus du dispositif de transport (5), et au moins l'un d'eux est orienté obliquement vers le bas sur le dispositif de transport (5) dans la direction de transport (R), au moins un autre étant orienté obliquement vers le bas sur le dispositif de transport (5) dans le sens opposé à la direction de transport (R).

**19.** Dispositif selon l'une des revendications 16 à 18, **caractérisé en ce qu'**un séparateur de gaz (70) est intercalé dans le conduit d'amenée (4) de dioxyde de carbone liquide et sépare le gaz contenu dans le dioxyde de carbone liquide.

**20.** Dispositif selon la revendication 19, **caractérisé en ce que** le séparateur de gaz (70) est constitué d'une chambre (71) de préséparation présentant une tubulure (73) d'amenée de l'écoulement de dioxyde de carbone biphasique qui est disposée latéralement dans la zone supérieure ou dans la zone centrale et une tubulure d'évacuation (74) du dioxyde de carbone liquide dégazé qui est disposée dans la zone inférieure et dans laquelle la phase gazeuse et la phase liquide sont séparées l'une de l'autre, tandis que le dioxyde de carbone gazeux séparé de la partie supérieure (75) s'y rassemble et est évacué par l'intermédiaire d'une tête de commande (72) disposée du côté supérieur et dotée d'une soupape d'évacuation régulée.

**21.** Dispositif selon la revendication 20, **caractérisé en ce que** la tubulure d'amenée (73) pour la création d'un écoulement de recirculation dans la chambre (71) de préséparation est disposée obliquement vers le haut et tangentiellement à l'axe longitudinal de la chambre cylindrique de préséparation (71), sur cette dernière.

**22.** Dispositif selon la revendication 20 ou 21, **caractérisé en ce que** la chambre de préséparation (71) est divisée en au moins deux chambres partielles (75, 76) par au moins une paroi de séparation (77) disposée en dessous de la tubulure d'amenée (73), dotée d'ouvertures et disposée transversalement par rapport à la direction longitudinale de la chambre de préséparation.

**23.** Dispositif selon l'une des revendications 20 à 22, **caractérisé en ce que** la tête de commande (72) est constituée d'une chambre à flotteur dotée d'une soupape supérieure d'évacuation, dont l'élément de fermeture est couplé à un flotteur situé dans la chambre à flotteur, la soupape d'évacuation étant fermée lorsque le flotteur se trouve dans une position haute dans la chambre à flotteur et étant ouverte lorsque le flotteur est dans une position basse.

**24.** Dispositif selon l'une des revendications 19 à 23, **caractérisé en ce que** le dioxyde de carbone gazeux séparé dans le séparateur de gaz (70) est amené dans la chambre de refroidissement ou de congélation (3) par un conduit de gaz (78) séparé.

**25.** Dispositif selon la revendication 24, **caractérisé en ce qu'**un organe de blocage (79) est disposé dans le conduit de gaz (78) en amont de la chambre de refroidissement ou de congélation (3).

**26.** Dispositif selon la revendication 24 ou 25, **caractérisé en ce que** le dioxyde de carbone liquide et le dioxyde de carbone gazeux provenant du séparateur de gaz (70) sont conduits vers la chambre de refroidissement ou de congélation (3) par un conduit tubulaire double formé de deux tubes disposés coaxialement l'un à l'intérieur de l'autre, le dioxyde de carbone gazeux étant conduit dans le tube annulaire extérieur.

**27.** Dispositif selon l'une des revendications 19 à 26, **caractérisé en ce qu'**un organe de blocage est disposé dans le conduit d'amenée de dioxyde de carbone liquide, en aval du séparateur de gaz et en amont de la chambre de refroidissement ou de congélation (3).

Fig.1

Fig. 2

Fig. 3a

A-B

Fig. 3b

C-D

Fig. 3c

Fig. 4

Fig. 5

EP 0 843 800 B1